# EUROPÄISCHE PATENTANMELDUNG

(11) **EP 1 195 760 A2**
(43) Veröffentlichungstag der Anmeldung: **10.04.2002**
(21) Anmeldenummer: 01123710.4
(22) Anmeldetag: 04.10.2001
(51) Int. Cl.: G11B 19/20

(54) **Vorrichtung an einem Laufwerk zum Drehen von Informationsplatten**

(30) Priorität: 06.10.2000 DE 10049499
(71) Anmelder: Philips Corporate Intellectual Property GmbH, 52064 Aachen (DE); Koninklijke Philips Electronics N.V., 5621 BA Eindhoven (NL)
(72) Erfinder: Hopf, Christian, 52064 Aachen (DE); Kunze Norbert, 52064 Aachen (DE); Müller, Stefan, 52064 Aachen (DE); Rumpf, Horst, 52064 Aachen (DE); Wouters, Cornelius, 52064 Aachen (DE)
(74) Vertreter: Volmer, Georg, Dipl.-Ing.

(57) **Zusammenfassung**

Die Erfindung bezieht sich auf eine Vorrichtung an einem Laufwerk zum Drehen von Informationsplatten (2), die vorzugsweise mit digitalen Informationen versehen sind oder versehen werden können, wobei die Informationsplatte (2) im Betriebszustand mittels eines Antriebsmotors (5) um ihr Zentrum gedreht wird und magnetisch zusammenwirkende Materialteile (8,9) vorhanden sind, die radial zur Drehachse (3) und in deren Richtung gegeneinander parallel versetzt angeordnet sind, von denen sich das eine (8) an der den Motor (3) tragenden Motorhalterung (4) und das andere (9) an der mit der Motorwelle (6) bewegten Plattenhalterung (1) befinden, wobei eines der Materialteile (8,9) ein ringförmiger Dauermagnet ist, wobei wenigstens eines der beiden magnetisch zusammenwirkenden Materialteile (8,9) exzentrisch zur Drehachse (3) angeordnet ist, wobei beide Materialteile (8,9) ringförmig ausgebildet und dabei so zueinander angeordnet sind, dass sich beim Umlauf die Richtung der Feldlinien nicht ändert.

## Beschreibung

Die Erfindung bezieht sich auf eine Vorrichtung an einem Laufwerk zum Drehen von Informationsplatten, die vorzugsweise mit digitalen Informationen versehen sind oder versehen werden können, wobei die Informationsplatte im Betriebszustand mittels eines Antriebsmotors um ihr Zentrum gedreht wird und magnetisch zusammenwirkende Materialteile vorhanden sind, die radial zur Drehachse und in deren Richtung gegeneinander parallel versetzt angeordnet sind, von denen sich das eine an der den Motor tragenden Motorhalterung und das andere an der mit der Motorwelle bewegten Plattenhalterung befindet, wobei eines der Materialteile ein ringförmiger Dauermagnet ist.

Aus der WO 91/10996 ist ein Laufwerk für CD-Platten bekannt, bei dem Magnetanordnungen vorgesehen sind, mit denen ein Spiel der Motorwelle vermieden werden soll. Dazu ist bei einer Ausführungsform an einer Grundplatte ein dauermagnetischer Ring und ein ferromagnetisches Kreissegment befestigt. Durch den dauermagnetischen Ring ist die Welle eines Antriebsmotors berührungsfrei hindurchgeführt. An der Plattenhalterung befindet sich eine ferromagnetische Scheibe. Dauermagnet und Scheibe sind zentrisch in parallelen Radialebenen zur Drehachse des Systems in Richtung der Drehachse parallel zueinander versetzt angeordnet.

Bei einer anderen Ausführungsform ist der dauermagnetische Ring an der Plattenhalterung vorgesehen. Das ferromagnetische Kreissegment ist aus der Grundplatte herausgebogen und seitlich nahe an den dauermagnetischen Ring herangeführt.

Die magnetischen Anziehungskräfte zwischen dem Dauermagneten und der ferromagnetischen Scheibe sorgen dafür, dass das Axialspiel eliminiert ist. Das ferromagnetische Kreissegment soll mittels der magnetischen Anziehungskraft ein Radialspiel der Motorwelle verhindern.
Dieser Aufbau hat den Nachteil, dass das Kreissegment ständig impulsartige Schwankungen des Magnetfeldes hervorruft und Motorleistung kostet.
Aus der US 4 730 299 ist es darüber hinaus bekannt, zur Vermeidung des Axialspieles das ferromagnetische Teil an der Plattenhalterung als Scheibe auszubilden.

Es ist Aufgabe der Erfindung, eine Vorrichtung an einem Laufwerk zum Drehen von Informationsplatten zu schaffen, mit der ein Axial- und Radialspiel der Motorwelle mittels einer einfachen und flachbauenden Konstruktion unterbunden ist, die keine Lastschwankungen auf den Motor bewirkt und verschleißfrei ist.

Die gestellte Aufgabe ist erfindungsgemäß dadurch erreicht, dass wenigstens eines der beiden magnetisch zusammenwirkenden Materialteile exzentrisch zur Drehachse angeordnet ist, dass beide Materialteile ringförmig ausgebildet sind, wobei sich beim Umlauf die Richtung der Feldlinien nicht ändert.

Diese exzentrische Bauweise hat den Vorteil, dass nur zwei magnetisch miteinander zusammenwirkende, ringförmige Materialteile nötig sind, um sowohl das axiale als auch das radiale Spiel der Motorwelle auszuschalten. Es können je nach den Anforderungen beide magnetisch zusammenwirkenden Materialteile dauermagnetisch ausgebildet sein oder nur eines von beiden. Der durchgängig ringförmige Aufbau beider zusammenwirkender Materialteile führt dazu, dass sich beim Umlauf die Richtung der Feldlinien nicht ändert.

Nach einer weiteren Ausgestaltung der Erfindung ist vorgesehen, dass beide magnetisch miteinander zusammenwirkenden Materialteile die Drehachse mit Abstand umschließen und die Innendurchmesser und Außendurchmesser etwa gleich bemessen sind. Die Kräftebelastungen führen kombiniert einen Spielausgleich herbei, der gleichmäßig und vor allem impulsfrei ist.

Nach einer weiteren Ausgestaltung der Erfindung ist vorgesehen, dass das ringförmige Materialteil, das einen ferromagnetischen Ring bildet, ein Teil der ferromagnetischen Motorhalterung ist, der um die Motorwelle herum hochgewölbt ist und in einer erhöhten Ebene einen Ring bildet, der die Motorwelle mit Abstand umschließt. Der ferromagnetische Ring ist damit ein Bestandteil der Motorhalterung.

Eine Ausführungsform der Erfindung ist derart aufgebaut, dass das als dauermagnetischer Ring ausgebildete Materialteil zentrisch an der Plattenhalterung in einer Radialebene parallel zum exzentrisch zur Motorwelle vorgesehenen ferromagnetischen Ring angeordnet ist. In diesem Fall liegen der ferromagnetische Ring und der dauermagnetische Ring exzentrisch zueinander übereinander.

Bei dieser Ausführungsform erweist es sich als zweckmäßig, wenn der dauermagnetische Ring axial magnetisiert ist.

Eine andere Ausführungsform der Erfindung ist derart aufgebaut, dass der dauermagnetische Ring zentrisch an der Plattenhalterung in einer Radialebene mit dem exzentrisch zur Motorwelle vorgesehenen ferromagnetischen Ring angeordnet ist. In diesem Fall liegen der ferromagnetische Ring und der dauermagnetische Ring in einer beiden annähernd gemeinsamen Radialebene. Das bedeutet, dass sich auf diese Weise die Bauhöhe verringern lässt.

Bei dieser zweiten Ausführungsform erweißt es sich als zweckmäßig, wenn der dauermagnetische Ring radial magnetisiert ist.

Die Erfindung wird anhand der Zeichnung näher erläutert. Es zeigen:

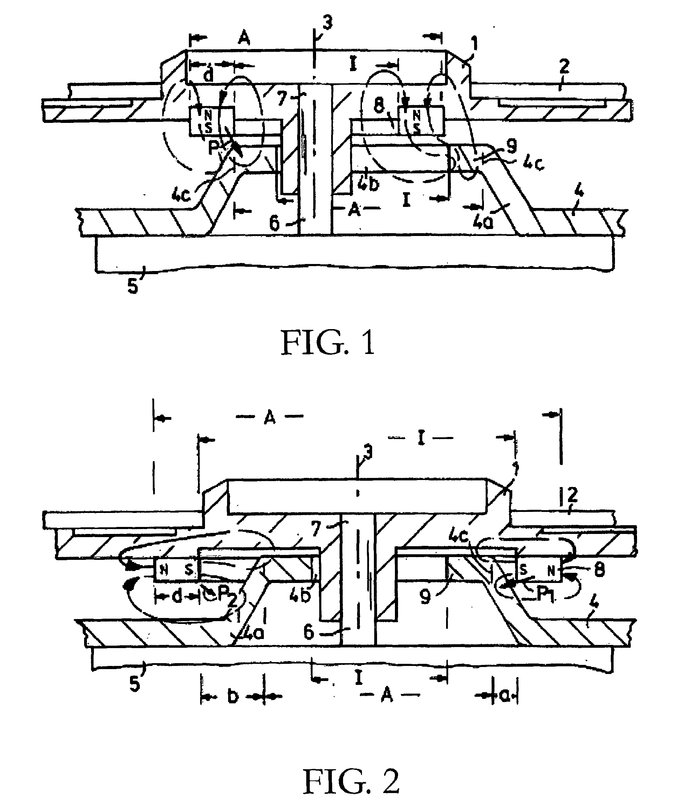

Fig. 1 eine Schnittdarstellung eines Ausschnittes aus einem Laufwerk zum Spielen digitaler Informationsplatten, wobei am von einer Motorwelle getragenen Plattenteller zentrisch zu ihr ein dauermagnetischer Ring angeordnet ist, die ferromagnetische Halterung des Antriebsmotors im Durchführungsbereich der Motorwelle aufgewölbt ist und exzentrisch zum dauermagnetischen Ring einen zweiten, in einer parallelen Ebene zu dem dauermagnetischen Ring angeordnete ferromagnetischen Ring bildet,
Fig. 2 eine Schnittdarstellung eines Ausschnittes aus einem Laufwerk zum Spielen digitaler Informationsplatten, wobei am von einer Motorwelle getragenen Plattenteller zentrisch zu ihr ein dauermagnetischer Ring angeordnet ist und die ferromagnetische Halterung des Antriebsmotors im Durchführungsbereich der Motorwelle aufgewölbt ist und exzentrisch zum dauermagnetischen Ring einen mit diesem zusammenwirkenden ferromagnetischen Ring in annähernd derselben Ebene bildet,
Fig. 1 zeigt im Schnitt die Plattenhalterung 1 eines Laufwerkes für Informationsplatten 2 für digitale Informationen. Derartige Informationsplatten 2 sind beispielsweise unter den Bezeichnungen CD, DVD, CD-Rom usw. gebräuchlich. Die Informationsplatten 2 werden mittels der Plattenhalterung 1 um eine zentrale Drehachse 3 gedreht.

Es ist eine als Motorhalterung dienende Grundplatte 4 vorgesehen, die einen Antriebsmotor 5 trägt, der mit seiner Motorwelle 6 die Plattenhalterung 1 drehen kann. Die Motorwelle 6 trägt dazu an ihrem oberen Ende 7 die Plattenhalterung 1.

Es ist zur Eliminierung eines axialen und radialen Spieles der Motorwelle 6 eine Magnetanordnung vorgesehen, die aus magnetisch miteinander zusammenwirkenden Materialteilen 8 und 9 besteht. Eines der magnetisch wirkenden, axial übereinander befindlichen Materialteile ist ein an der Plattenhalterung 1 zentrisch zur Motorwelle 6 angeordneter dauermagnetischer Ring 8. Das andere Materialteil ist ein ferromagnetischer Ring 9, der Bestandteil der Motorhalterung 4 ist, durch die die Motorwelle 6 hindurchgeführt ist. Dieser ferromagnetische Ring 9 ist durch eine Hochwölbung 4a, ein Herausziehen des die Motorwelle 6 umschließenden Teiles der Motorhalterung 4 im Bereich der Wellendurchführung 4b gebildet. Dabei bildet sich in einer erhöhten Ebene der ferromagnetische Ring 9 aus. Die Hochwölbung 4a im Bereich der Wellendurchführung 4b liegt bei dieser Ausführungsform exzentrisch zum dauermagnetischen Ring 8. Der Innendurchmesser I der Wellendurchführung 4b entspricht etwa dem Innendurchmesser I des dauermagnetischen Ringes 8. Der exzentrische Versatz des ferromagnetischen Ringes 9 gegenüber dem dauermagnetischen Ring 8 entspricht etwa der radialen Materialbreite d des dauermagnetischen Ringes 8. Auch die Außendurchmesser A von dauermagnetischem Ring 8 und magnetisch relevantem ferromagnetischen Ring 9 sind etwa gleich. Die äußere Begrenzung des als magnetisch wirksam anzusehenden Teiles der Aufwölbung 4a ist durch gestrichelte Linien 4c angegeben.

Der dauermagnetische Ring 8 ist vorzugsweise axial magnetisiert. Auch eine radiale Magnetisierung ist möglich. Es bildet sich zwischen dem dauermagnetischen Ring 8 und dem ferromagnetischen Ring 9 eine Kraft P mit einem Kraftfeld aus, das die Motorwelle frei von Wechselimpulsen spielfrei macht, um einen gleichmäßigen Lauf zu gewährleisten Fig. 2 zeigt eine gegenüber dem Aufbau nach Fig. 1 geänderte Anordnung.
Es ist eine als Motorhalterung dienende Grundplatte 4 vorgesehen, die einen Antriebsmotor 5 trägt, der mit seiner Motorwelle 6 die Plattenhalterung 1 drehen kann. Die Motorwelle 6 trägt dazu an ihrem oberen Ende 7 die Plattenhalterung 1.

Der dauermagnetische Ring 8 ist auch in diesem Fall zentrisch zur Motorwelle 6 an der Plattenhalterung 1 angeordnet. Er legt sich um den ferromagnetischen Ring 9, der den oberen planen Abschluss der Hochwölbung 4a bildet. Ferromagnetischer Ring 9 und dauermagnetischer Ring 8 liegen damit wenigstens etwa in einer Radialebene. Die Hochwölbung 4a im Bereich der Wellendurchführung 4b, bei der der ferromagnetische Ring 9 entsprechend Fig. 1 entsteht, liegt exzentrisch zur Plattenhalterung 4 und damit exzentrisch zum dauermagnetischen Ring 8. Der exzentrische Versatz des dauermagnetischen Ringes 8 gegenüber dem ferromagnetischen Ring 9 ist der radialen Materialbreite d des ferromagnetischen Ringes 9 weitgehend angenähert sein. Generell gilt, dass beim exzentrischen Versatz a ungleich b ist.

Der dauermagnetische Ring 8 ist vorzugsweise radial magnetisiert. Es bildet sich zwischen dem dauermagnetischen Ring 8 und dem ferromagnetischen Ring 9 ein Kraftfeld aus, das die Motorwelle frei von Wechselimpulsen spielfrei macht, um einen gleichmäßigen Lauf zu gewährleisten.

Die Abstände a und b zwischen den Ringen 8 und 9 sind wegen der bestehenden Exzentrizität rechts und links ungleich. Dies ist in Fig.2 herausgestellt. Durch die Exzentrizität der magnetisch miteinander zusammenwirkenden Bauteile 8 und 9 werden die magnetischen Feldlinien in Richtung der Exzentrizität verzerrt. Wie Fig. 2 zeigt stellen sich zwischen den Ringen 8 und 9 schräg zur Achse 3 gerichtete Kräfte P1 und P2 ein, mittels der das Spiel zwischen der Motorwelle 6 und deren Lagerung in der Motorhalterung 4 sowohl in axialer als auch in radialer Richtung einseitig ausgeglichen wird. Die Kraft P1, bei der der dauermagnetische Ring 8 näher an dem ferromagnetischen Ring 9 liegt, ist dabei größer als die Kraft P2, bei der der dauermagnetische Ring 8 weiter entfernt ist vom ferromagnetischen Ring 9.

## Patentansprüche

1. Vorrichtung an einem Laufwerk zum Drehen von Informationsplatten (2), die vorzugsweise mit digitalen Informationen versehen sind oder versehen werden können, wobei die Informationsplatte (2) im Betriebszustand mittels eines Antriebsmotors (5) um ihr Zentrum gedreht wird und magnetisch zusammenwirkende Materialteile (8,9) vorhanden sind, die radial zur Drehachse (3) und in deren Richtung gegeneinander parallel versetzt angeordnet sind, von denen sich das eine (8) an der den Motor (3) tragenden Grundplatte (4) und das andere (9) an der mit der Motorwelle (6) bewegten Plattenführung (1) befinden, wobei eines der Materialteile (8,9) ein ringförmiger Dauermagnet ist,
**dadurch gekennzeichnet,**
**dass** wenigstens eines der beiden magnetisch zusammenwirkenden Materialteile (8,9) exzentrisch zur Drehachse (3) angeordnet ist, dass beide Materialteile (8,9) ringförmig ausgebildet sind, wobei sich beim Umlauf die Richtung der Feldlinien nicht ändert.

2. Vorrichtung nach Anspruch 1,
**dadurch gekennzeichnet,**
**dass** beide magnetisch miteinander zusammenwirkenden Materialteile (8,9) die Drehachse (3) mit Abstand umschließen und die Innendurchmesser (I) und Außendurchmesser (A) etwa gleich bemessen sind.

3. Vorrichtung nach Anspruch 1 und/oder 2,
**dadurch gekennzeichnet,**
**dass** das ringförmige Materialteil, das einen ferromagnetischen Ring (9) bildet, ein Teil der ferromagnetischen Motorhalterung (4) ist, der um die Motorwelle (6) herum hochgewölbt ist und in einer erhöhten Ebene einen Ring bildet, der die Motorwelle (6) mit Abstand umschließt.

4. Vorrichtung nach einem oder mehreren der Ansprüche 1 bis 3,
**dadurch gekennzeichnet,**
**dass** das als dauermagnetischer Ring (8) ausgebildete Materialteil zentrisch an der Plattenhalterung (1) in einer Radialebene parallel zum exzentrisch zur Motorwelle (6) vorgesehenen ferromagnetischen Ring (9) angeordnet ist.

5. Vorrichtung nach Anspruch 4,
**dadurch gekennzeichnet,**
**dass** der dauermagnetische Ring (8) axial magnetisiert ist.

6. Vorrichtung nach einem oder mehreren der Ansprüche 1 bis 3,
**dadurch gekennzeichnet,**
**dass** der dauermagnetische Ring (8) zentrisch an der Plattenhalterung (1) in einer Radialebene mit dem exzentrisch zur Motorwelle (6) vorgesehenen ferromagnetischen Ring (9) angeordnet ist.

7. Vorrichtung nach Anspruch 6,
**dadurch gekennzeichnet,**
**dass** der dauermagnetische Ring (8) radial magnetisiert ist
